# EUROPÄISCHE PATENTSCHRIFT

(11) **EP 3 364 532 B1**
(45) Veröffentlichungstag und Bekanntmachung des Hinweises auf die Patenterteilung: **13.05.2020**
(21) Anmeldenummer: 18155851.1
(22) Anmeldetag: 08.02.2018
(51) Int. Cl.: H02K 41/03, B60K 5/12, H01F 7/16, H01F 7/08, H02K 1/34

(54) **LINEARAKTUATOR**
LINEAR ACTUATOR
ACTIONNEUR LINÉAIRE

(30) Priorität: 15.02.2017 DE 102017103027
(43) Veröffentlichungstag der Anmeldung: 22.08.2018
(73) Patentinhaber: RAPA Automotive GmbH & Co. KG, 95100 Selb (DE)
(72) Erfinder: FRANZ, Markus, 95030 Hof (DE); DÖHLA, Werner, 95482 Gefrees (DE); VIROW, Martin, 95145 Oberkotzau (DE)
(74) Vertreter: Klunker IP Patentanwälte PartG mbB

(56) Entgegenhaltungen:
- DE-A1-102013 202 166
- JP-A- H0 731 127
- US-A1- 2008 001 483

## Beschreibung

Die vorliegende Erfindung betrifft einen Linearaktuator, insbesondere die geometrische Anordnung von Permanentmagneten auf einem ferromagnetischen Magnetanker des Linearaktuators, sowie dessen Verwendung in einem aktiven Motorlager eines Fahrzeugs.

Aus der Druckschrift DE 11 2011 105 558 T5 ist ein Permanentmagnet-Rotor mit verbessertem magnetischen Kraftfluss bekannt, welcher durch eine spezielle Anordnung der Permanentmagneten im Rotor erzielt wird.

Zudem offenbart die Druckschrift US 2008/001483 A1 einen zylindrischen Linearmotor, welcher aus Segmenten bestehende Permanentmagneten umfasst.

Aus der Druckschrift JP H07 31127 A ist zudem ein Lineargleichstrommotor mit sinusförmiger magnetischer Flussdichteverteilung bekannt, welcher einen zwischen einem Permanentmagneten und einem Stator bestehenden Luftspalt aufweist.

In Kraftfahrzeugen können zur Verbesserung des Komforts so genannte aktive Motorlager Anwendung finden. Mittels eines aktiven Motorlagers können unerwünschte Schwingungen und eine dadurch verursachte Geräuschübertragung in den Innenraum des Fahrzeugs unterdrückt werden. Unerwünschte Schwingungen können beispielsweise bei Abschaltung eines oder mehrerer Zylinder in einem Motor auftreten, wodurch der Motor unrund laufen kann. Ein aktiv gelagerter Motor weist dazu eine Steuerung für einen oder mehrere Aktuatoren auf, um den Schwingungen des Motors mithilfe der Aktuatoren in der für einen Fachmann geläufigen Weise entgegenzuwirken.

Als Aktuatoren können insbesondere Linearaktuatoren zum Einsatz kommen. Diese weisen üblicherweise einen ferromagnetischen Stator auf, der eine elektrisch bestrombare Spule zur Erzeugung eines elektromagnetischen Feldes umfasst, sowie einen bezüglich einer Längsachse der Spule axial beweglich gelagerten ferromagnetischen Magnetanker mit mindestens einem Permanentmagnetring, der dem Stator gegenüberliegt. Das magnetische Feld des Permanentmagnetrings wird durch das bei der Bestromung der Spule entstehende elektromagnetische Feld überlagert, wodurch infolge der resultierenden elektromagnetischen Kräfte eine lineare Bewegung des Magnetankers entsteht.

Der Permanentmagnetring setzt sich üblicherweise aus mehreren, aneinandergrenzenden Permanentmagnetringsegmenten zusammen. Auf die am Magnetanker angebrachten Permanentmagnetringsegmente wirken, in Abhängigkeit von der elektrischen Bestromung der Spule und infolge des dadurch erzeugten elektromagnetischen Feldes, lösende Kräfte, die ein Verkleben der Permanentmagnetringsegmente am Magnetanker notwendig machen.

Betriebs- und Temperaturbelastungen beeinflussen die Festigkeit der Klebeverbindungen, wodurch es zu einer Versprödung des Klebstoffes kommen kann. Dies führt zu einer Beeinträchtigung der Haftfähigkeit der Klebeverbindung, sodass es im Laufe der Zeit zu einer Ablösung der Permanentmagnetringsegmente vom Magnetanker kommen kann, was letztlich den Funktionsausfall des Linearaktuators zur Folge hat.

Aufgabe der vorliegenden Erfindung ist es, ein Haften der Permanentmagnetringsegmente am ferromagnetischen Magnetanker des Linearaktuator zu verbessern.

Die Aufgabe wird durch einen Linearaktuator mit den Merkmalen des unabhängigen Anspruchs 1 gelöst. Weiterbildungen und vorteilhafte Ausgestaltungen sind in den abhängigen Ansprüchen angegeben.

Erfindungsgemäß umfasst der Linearaktuator einen ferromagnetischen Magnetanker mit mindestens einem Permanentmagnetring, der einem ferromagnetischen Stator mit einer elektrisch bestrombaren Spule gegenüberliegt und der mehrere Permanentmagnetringsegmente besitzt, wobei zwischen einer dem Stator zugewandten Oberfläche der Permanentmagnetringsegmente und einer den Permanentmagnetringsegmenten zugewandten Oberfläche des Stators ein winkliger Spalt besteht. Dies führt infolge des axial zunehmenden radialen Abstandes zwischen der dem Stator zugewandten Oberfläche der Permanentmagnetringsegmente und der den Permanentmagnetringsegmenten zugewandten Oberfläche des Stators zu einer Reduzierung von an den Permanentmagnetringsegmenten wirkenden Kippmomenten, da sich die magnetischen Anziehungskräfte des Permanentmagnetrings gegenüber dem Stator mit zunehmendem radialen Abstand verringern.

Durch diese Gestaltung des Magnetankers, des Stators sowie der geometrischen Anordnung der Permanentmagnetringsegmente am Magnetanker kann die Haftung der Permanentmagnetringsegmente am Magnetanker bei Bestromung der Spule für alle spezifischen Betriebspunkte erhöht werden, da die lösend an den Permanentmagnetringsegmenten angreifenden elektromagnetischen Kräfte und Momente reduziert sind. Dadurch können kostengünstigere, weniger performante Klebstoffe zum Einsatz kommen.

Vorzugsweise besitzt der winklige Spalt einen Spaltwinkel zwischen 2° und 10°, besonders bevorzugt zwischen 2° und 6°. Besonders gute Ergebnisse werden bei einem Spaltwinkel von etwa 4° erzielt. Dementsprechend kann die dem Stator zugewandte Oberfläche der Permanentmagnetringsegmente gegenüber der Längsachse der Spule eine Neigung zwischen 2° und 10°, vorzugsweise zwischen 2° und 6°, besonders bevorzugt von 4°, besitzen. Es ist aber auch möglich, dass die den Permanentmagnetringsegmenten zugewandte Oberfläche des Stators gegenüber der Längsachse der Spule eine Neigung zwischen 2° und 10°, vorzugsweise zwischen 2° und 6°, besonders bevorzugt von 4°, besitzt, oder dass der Spaltwinkel durch eine Neigung sowohl der Permanentmagnetringsegmentflächen als auch der Statoroberfläche gebildet wird.

Vorzugsweise werden Permanentmagnetringsegmente mit konstanter radialer Dicke, insbesondere Ringsegmente mit quaderförmigem Querschnitt, eingesetzt. Daher besitzt der Magnetanker im Bereich der Permanentmagnetringsegmente eine entsprechende axial konische Verjüngung, sodass die Magnetankerauflagefläche für die Permanentmagnetringsegmente den genannten Neigungswinkel zwischen 2° und 10°, vorzugsweise zwischen 2° und 6°, besonders bevorzugt von 4°, gegenüber der Längsachse der Spule aufweist.

In einer Ausführungsform ist mindestens ein weiterer Permanentmagnetring, der vorzugsweise spiegelsymmetrisch zu dem beschriebenen Permanentmagnetring bezüglich einer senkrecht zur Längsachse der Spule liegenden Ebene ist, am Magnetanker angebracht.

Die Permanentmagnetringsegmente des jeweiligen Permanentmagnetrings sind am Magnetanker mit einem relativ großen tangentialen Abstand zueinander angeordnet. Zwischen den Permanentmagnetringsegmenten besteht daher ein Winkelabstand von 2° bis 5°, vorzugsweise von 3,5°. Der Abstand ist so groß, dass die tangential zwischen den Permanentmagnetringsegmenten wirkenden Abstoßungskräfte bzw. die daraus resultierenden radial auf die Permanentmagnetringsegmente wirkenden Abhebekräfte geringer sind als die radial zwischen den Permanentmagnetringsegmenten und dem Magnetanker wirkenden magnetischen Anziehungskräfte. Dadurch entfällt die Notwendigkeit der mechanischen Fixierung der Permanentmagnetringsegmente am Magnetanker während der Montage des Permanentmagnetrings auf dem Magnetanker. In der Folge kann gemäß einer bevorzugten Ausführung auf eine Klebeverbindung zwischen den Permanentmagnetringsegmenten und dem Magnetanker gänzlich verzichtet werden. Ein aufwendiges Vorbehandeln der Klebeflächen sowie ein Nachbehandeln des Klebstoffs bis zum Aushärten, in Form von Tempern, kann somit ebenfalls entfallen, wodurch schnellere Taktzeiten beim Zusammenbau des Linearaktuators möglich werden.

Eine zwischen den Permanentmagnetringsegmenten und dem ferromagnetischen Magnetanker vorherrschende Klebeschicht wirkt, infolge der gegenüber dem Magnetanker geringeren magnetischen Leitfähigkeit der Klebeschicht, zudem magnetisch isolierend und behindert dadurch den magnetischen Fluss. Ein Verzicht der Klebeverbindung wirkt sich somit positiv auf den magnetischen Fluss und damit auf die Haftung der Permanentmagnetringsegmente am Magnetanker aus.

Um die Haftung der Permanentmagnetringsegmente am Magnetanker weiter zu erhöhen ist es vorteilhaft, dass der Magnetanker im Vergleich zum Stator aus einem Material mit einer höheren Permeabilität besteht. Die im Vergleich zum Stator höhere Permeabilität des Magnetankers bewirkt eine entsprechende Erhöhung des magnetischen Flusses im Magnetanker. Dadurch erhöhen sich insbesondere die radial wirkenden Anziehungskräfte zwischen den Permanentmagnetringsegmenten und dem Magnetanker im Vergleich zu den radial wirkenden Kräften zwischen den Permanentmagnetringsegmenten und dem Stator, die eine ablösende Wirkung auf die Permanentmagnetringsegmente vom Magnetanker besitzen.

Prinzipiell ist eine Anordnung der Permanentmagnetringsegmente am Magnetanker möglich, bei der die Magnetisierungsrichtung der Permanentmagnetringsegmente parallel oder senkrecht zur Auflagefläche am Magnetanker verläuft. Da die magnetischen Kräfte eines Permanentmagneten an dessen Nord- und Südpol besonders stark wirken, ist eine Anordnung vorteilhaft, bei der die Magnetisierungsrichtung der Permanentmagnetringsegmente senkrecht zur Auflagefläche am Magnetanker verläuft, so dass die Haftung der Permanentmagnetringsegmente am Magnetanker positiv beeinflusst wird.

Die geneigte Anordnung der Permanentmagnetringsegmente führt zu einer Schwächung des Magnetkreises. Die vergrößerten tangentialen Abstände zwischen den Permanentmagnetringsegmenten des entsprechenden Permanentmagnetringes verringern darüber hinaus das Permanentmagnetvolumen. Beides führt zu einer Leistungsbeeinträchtigung des Linearaktuators. Vorzugsweise finden daher Permanentmagnetringsegmente mit einer größeren radialen Dicke und/oder Permanentmagnetringsegmente aus entsprechend leistungsfähigerem Material Verwendung.

Bevorzugte Ausführungsform der Erfindung sowie weitere vorteilhafte Ausgestaltungen werden anhand der begleitenden Zeichnungen näher erläutert. Es zeigen:
- Fig. 1: einen Linearaktuator mit Magnetanker in einer Schnittdarstellung und
- Fig. 2: eine perspektivische Darstellung des Magnetankers des Linearaktuators aus Fig. 1.

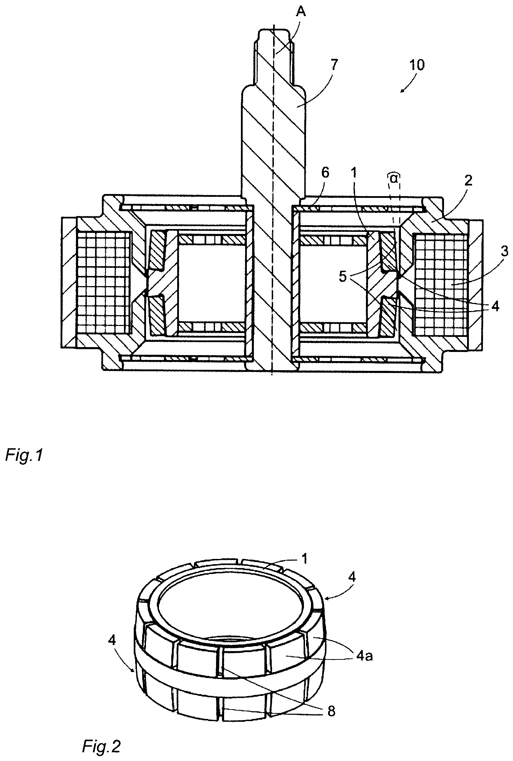

In Fig. 1 ist ein Linearaktuator 10 für ein aktives Motorlager eines Kraftfahrzeuges dargestellt, dessen Aufbau und Funktionsweise detailliert in der Druckschrift DE 10 2013 202 166 A1 beschrieben ist. Insoweit wird auf den Inhalt dieser Druckschrift explizit Bezug genommen.

Der Linearaktuator 10, weist einen ortsfesten Stator 2 aus ferromagnetischem Material auf, der eine elektrisch bestrombare Spule 3 umfasst, sowie einen Magnetanker 1, ebenfalls aus ferromagnetischem Material, der bezüglich einer Längsachse A der Spule 3 durch Federscheiben 6 axial beweglich am Stator 2 gelagert ist. Darüber hinaus umfasst der Linearaktuator 10 einen am Magnetanker fixierten Stößel 7, durch dessen Verlagerung der Linearaktuator 10 andere Bauteile des aktiven Motorlagers so beeinflussen kann, dass Schwingungen des Motors des Kraftfahrzeuges entgegengewirkt wird. Hier befindet sich der Magnetanker 1 im radial innen liegenden Bereich und der Stator 2 mit der Spule 3 im radial außen liegenden Bereich des Linearaktuators 10, wobei prinzipiell auch eine umgekehrte Anordnung dieser Bauteile möglich ist. An dem Magnetanker 1 sind zwei Permanentmagnetringe 4 angeordnet, die spiegelsymmetrisch bezüglich einer Ebene senkrecht zur Längsachse A der Spule 3 am Magnetanker 1 angebracht sind und dem Stator 2 gegenüberliegen. Es können auch mehr als zwei, insbesondere vier, sechs, oder acht Permanentmagnetringe 4 in entsprechender spiegelsymmetrischer Anordnung bezüglich der Ebene vorgesehen sein.

Im bestromten Zustand der Spule 3 wird durch den Stromfluss ein Magnetfeld erzeugt, das sich senkrecht zu den Windungen der Spule 3, im ferromagnetischen Stator 2, den Permanentmagnetringen 4 und dem ferromagnetischen Magnetanker 1 ausbreitet. Die Richtung der magnetischen Feldlinien des durch die Spule 3 erzeugten Magnetfeldes ist dabei abhängig von der Richtung des Stromflusses durch die Spule 3. Die am Magnetanker 1 angebrachten Permanentmagnetringe 4 weisen jeweils ein eigenes Magnetfeld auf. Die Flusslinien dieser Magnetfelder verlaufen gegenläufig zueinander und überlagern sich bei Bestromung der Spule 3 mit dem dadurch hervorgerufenen Magnetfeld. Durch Überlagerung der Magnetfelder entsteht eine Kraft, die eine axiale Verschiebung des Magnetankers 1 und damit des Stößels 7 verursacht. Die genannte Verschiebung ist also abhängig von der Stärke und der Richtung des Stroms in der Spule 3. Der konkrete Magnetfeldverlauf wird wesentlich bestimmt durch die geometrische Gestalt der metallischen Bauelemente, insbesondere Magnetanker 1 und Stator 2. In Druckschrift DE 10 2014 200 647 A1 wird erläutert, wie sich derartige Magnetfeldverläufe einstellen können.

Wie in Fig. 2 gezeigt ist, sind die beiden Permanentmagnetringe 4 jeweils aus mehreren Permanentmagnetringsegmenten 4a gebildet. Hier bestehen die beiden Permanentmagnetringe 4 aus zwölf Permanentmagnetringsegmenten 4a, die jeweils einen tangentialen Abstand 8 zueinander aufweisen. Dabei wird beachtet, dass die Permanentmagnetringsegmente 4a des jeweiligen Permanentmagnetrings 4 am Magnetanker 1 mit einem derart großen tangentialen Abstand 8 zueinander angeordnet sind, dass die tangential zwischen den Permanentmagnetringsegmenten 4a wirkenden Abstoßungskräfte und die daraus resultierenden radial auf die Permanentmagnetringsegmente 4a wirkenden Abhebekräfte geringer sind als die radial zwischen den Permanentmagnetringsegmenten 4a und dem Magnetanker 1 wirkenden magnetischen Anziehungskräfte.

Zwischen einer dem Stator 2 zugewandten Oberfläche der Permanentmagnetringsegmente 4a und einer den Permanentmagnetringsegmenten 4a zugewandten Oberfläche des Stators 2 besteht ein winkliger Spalt 5 (Fig. 1), dessen Spaltwinkel α zwischen 2° und 10°, vorzugsweise zwischen 2° und 6°, liegt und besonders bevorzugt 4° beträgt und der mit Luft oder ggf. mit Öl gefüllt ist. Um den entsprechenden Spaltwinkel α zu erhalten, weist wie in Fig. 1 dargestellt, die dem Stator 2 zugewandte Oberfläche der Permanentmagnetringsegmente 4a gegenüber der Längsachse A der Spule 3 die entsprechende Neigung auf. Weitere Gestaltungen des winkligen Spalts 5 sind möglich z. B. durch ein entsprechendes Neigen der den Permanentmagnetringsegmenten 4a zugewandten Oberfläche des Stators 2, wobei dann die dem Stator 2 zugewandte Oberfläche der Permanentmagnetringsegmente 4a parallel zur Längsachse A der Spule 3 gerichtet bleibt, oder durch ein Neigen der beiden genannten Oberflächen, sodass sich der winklige Spalt 5 mit dem entsprechenden Spaltwinkel α einstellt.

Aus Fig. 1 ist ersichtlich, dass der Magnetanker 1 im Bereich der Permanentmagnetringsegmente 4a eine axial konische Verjüngung besitzt, sodass Permanentmagnetringsegmente 4a mit konstanter radialer Dicke, insbesondere Ringsegmente mit quaderförmigem Querschnitt, eingesetzt werden können. Hier weisen die Permanentmagnetringsegmente 4a eine axiale Länge von 8mm und eine radiale Dicke von 3mm auf, also ein Verhältnis zwischen axialer Länge zu radialer Dicke von 2,67:1. Verhältnisse von 2,5:1 bis 3,0:1 können zweckmäßige Werte sein. Der tangentiale Abstand 8 zwischen den Permanentmagnetringsegmenten 4a beträgt hier ca. 1,4mm, das entspricht bei einem Innendurchmesser des Permanentmagnetrings 4 von 45,4mm einem Wert von 3,5°. Winkelabstände zwischen 3° und 5° können zweckmäßige Werte sein.

Die Magnetisierungsrichtung der Permanentmagnetringsegmente 4a verläuft vorzugsweise senkrecht zur Auflagefläche der Permanentmagnetringsegmente 4a am Magnetanker 1, da die magnetischen Kräfte eines Permanentmagneten an dessen Nord- und Südpol besonders stark wirken, sodass die Haftung der Permanentmagnetringsegmente 4a am Magnetanker 1 verstärkt wird.

Prinzipiell sind auch davon abweichende Anordnungen der Permanentmagnetringsegmente 4a am Magnetanker 1, insbesondere eine Anordnung mit einer Magnetisierungsrichtung parallel zur Auflagefläche am Magnetanker, möglich.

Eine weitere Erhöhung der Haftung der Permanentmagnetringsegmente 4a am Magnetanker 1 kann erzielt werden, indem der Magnetanker 1 im Vergleich zum Stator 2 einen höheren magnetischen Fluss aufweist. Dies kann unter anderem erreicht werden, indem der Magnetanker 1 aus einem Material mit einer höheren Permeabilität besteht als der Stator 2.

Durch die erhöhte Haftung der Permanentmagnetringsegmente 4a am Magnetanker 1, infolge höherer, radial zwischen den Permanentmagnetringsegmenten 4a und dem Magnetanker 1 wirkenden magnetischen Anziehungskräfte, kann auf eine Klebeschicht zwischen den Permanentmagnetringsegmente 4a und dem Magnetanker 1 verzichtet werden. Eine Klebeschicht wirkt, infolge ihrer gegenüber dem Magnetanker geringeren magnetischen Leitfähigkeit, magnetisch isolierend und behindert dadurch den magnetischen Fluss. Ein Verzicht der Klebeschicht wirkt sich somit positiv auf den magnetischen Fluss aus.

## Patentansprüche

1. Linearaktuator (10), umfassend einen Stator (2), der eine elektrisch bestrombare Spule (3) zur Erzeugung eines elektromagnetischen Feldes aufweist, sowie einen bezüglich einer Längsachse (A) der Spule (3) axial beweglich gelagerten Magnetanker (1), an dem mindestens ein Permanentmagnetring (4) angeordnet ist, der dem Stator (2) gegenüberliegt und mehrere Permanentmagnetringsegmente (4a) aufweist, wobei zwischen einer dem Stator (2) zugewandten Oberfläche der Permanentmagnetringsegmente (4a) und einer den Permanentmagnetringsegmenten (4a) zugewandten Oberfläche des Stators (2) ein winkliger Spalt (5) derart besteht, dass ein radialer Abstand zwischen der dem Stator (2) zugewandten Oberfläche der Permanentmagnetringsegmente (4a) und der den Permanentmagnetringsegmenten zugewandten Oberfläche des Stators (2) in axialer Richtung zunimmt, wobei die Permanentmagnetringsegmente (4a) des Permanentmagnetrings (4) am Magnetanker (1) mit einem tangentialen Abstand (8) zueinander angeordnet sind,
**dadurch gekennzeichnet, dass**
ein Winkelabstand zwischen den Permanentmagnetringsegmenten (4a) von 2° bis 5° oder von 3,5° besteht, sodass die aus den tangential zwischen den Permanentmagnetringsegmenten (4a) wirkenden Abstoßungskräften resultierenden, radial auf die Permanentmagnetringsegmente (4a) wirkenden Abhebekräfte geringer sind als die radial zwischen den Permanentmagnetringsegmenten (4a) und dem Magnetanker (1) wirkenden magnetischen Anziehungskräfte.

2. Linearaktuator (10) nach Anspruch 1, wobei der winklige Spalt (5) einen Spaltwinkel (α) zwischen 2° und 10° oder zwischen 2° und 6° oder von 4° besitzt.

3. Linearaktuator (10) nach Anspruch 1 oder 2, wobei die dem Stator (2) zugewandte Oberfläche der Permanentmagnetringsegmente (4a) gegenüber der Längsachse (A) der Spule (3) eine Neigung zwischen 2° und 10° oder zwischen 2° und 6° oder von 4° besitzt.

4. Linearaktuator (10) nach Anspruch 1 oder 2, wobei die den Permanentmagnetringsegmenten (4a) zugewandte Oberfläche des Stators (2) gegenüber der Längsachse (A) der Spule (3) eine Neigung zwischen 2° und 10° oder zwischen 2° und 6° oder von 4° besitzt.

5. Linearaktuator (10) nach einem der Ansprüche 1 bis 4, wobei sich der Magnetanker (1) im Bereich der Permanentmagnetringsegmente (4a) axial konisch verjüngt.

6. Linearaktuator (10) nach einem der Ansprüche 1 bis 5, wobei zu dem mindestens einen Permanentmagnetring (4) mindestens ein weiterer Permanentmagnetring (4) spiegelsymmetrisch bezüglich einer senkrecht zur Längsachse (A) der Spule (3) liegenden Ebene am Magnetanker (1) angebracht ist.

7. Linearaktuator (10) nach einem der Ansprüche 1 bis 6, wobei die Permanentmagnetringsegmente (4a) allein durch ihre Magnetkräfte am Magnetanker (1) gehalten werden.

8. Linearaktuator (10) nach einem der Ansprüche 1 bis 7, wobei der Magnetanker (1) im Vergleich zum Stator (3) aus einem Material mit höherer Permeabilität besteht.

9. Linearaktuator (10) nach einem der Ansprüche 1 bis 8, wobei die Magnetisierungsrichtung der Permanentmagnetringsegmente (4a) senkrecht zu einer Auflagefläche des Magnetankers (1), auf der die Permanentmagnetringsegmente (4a) aufliegen, verläuft.

10. Linearaktuator (10) nach einem der Ansprüche 1 bis 9, wobei die Permanentmagnetsegmente (4a) ein Verhältnis von axialer Länge zu radialer Dicke von 2,5:1 bis 3,0:1 aufweisen.

11. Verwendung des Linearaktuators (10) nach einem der Ansprüche 1 bis 10 in einem Motorlager für einen Motor eines Fahrzeuges.

## Claims

1. A linear actuator (10) comprising a stator (2) which has an electrically energizable coil (3) for generating an electromagnetic field, as well as a magnetic armature (1) which is mounted axially movable with regard to a longitudinal axis (A) of the coil (3), with which at least one permanent magnet ring (4) is arranged which opposes the stator (2) and has several permanent magnet ring segments (4a), wherein between a surface of the permanent magnet ring segments (4a) which faces the stator (2) and a surface of the stator (2) which faces the permanent magnet ring segments (4a) there exists an angular gap (5) such that a radial distance between the surface of the permanent magnet ring segments (4a) which faces the stator (2) and the surface of the stator (2) which faces the permanent ring segments increases in the direction of the longitudinal axis, wherein the permanent magnet ring segments (4a) of the permanent magnet ring (4) are arranged at the magnetic armature (1) with a tangential distance (8) to each other,
**characterized in that**
there exists an angle distance between the permanent magnet ring segments (4a) of 2° to 5° or of 3.5° such that the lift-off forces acting radially on the permanent magnet ring segments (4a) and resulting from the repulsion forces acting tangentially between the permanent magnet ring segments (4a) are lower than the magnetic attraction forces acting radially between the permanent magnet ring segments (4a) and the magnetic armature (1).

2. The linear actuator (10) according to claim 1, wherein the angular gap (5) has a gap angle (α) between 2° and 10°, preferably between 2° and 6°, particularly preferably of 4°.

3. The linear actuator (10) according to any of claims 1 or 2, wherein the surface of the permanent magnet ring segments (4a) which faces the stator (2) has an inclination relative to the longitudinal axis (A) of the coil (3) between 2° and 10°, preferably between 2° and 6°, particularly preferably of 4°.

4. The linear actuator (10) according to any of claims 1 to 2, wherein the surface of the stator (2) which faces the permanent magnet ring segments (4a) has an inclination relative to the longitudinal axis (A) of the coil (3) between 2° and 10°, preferably between 2° and 6°, particularly preferably of 4°.

5. The linear actuator (10) according to any of claims 1 to 4, wherein the magnetic armature (1) axially conically tapers in the region of the permanent magnet ring segments (4a).

6. The linear actuator (10) according to any of claims 1 to 5, wherein in addition to the at least one permanent magnet ring (4) there is attached at least one further permanent magnet ring (4) to the magnetic armature (1) in a mirror-symmetrical fashion with regard to a plane lying perpendicular to the longitudinal axis (A) of the coil (3).

7. The linear actuator (10) according to any of claims 1 to 6, wherein the permanent magnet ring segments (4a) are held at the magnetic armature (1) only by their magnetic forces.

8. The linear actuator (10) according to any of claims 1 to 7, wherein the magnetic armature (1) consists of a material with higher permeability in comparison to the stator (3).

9. The linear actuator (10) according to any of claims 1 to 8, wherein the magnetization direction of the permanent magnet ring segments (4a) extends perpendicular to a supporting surface of the magnetic armature (1) on which the permanent magnet ring segments (4a) rest.

10. The linear actuator (10) according to any of claims 1 to 9, wherein the permanent magnet segments (4a) have a ratio of axial length to radial thickness from 2.5:1 to 3.0:1.

11. A use of the linear actuator (10) according to any of claims 1 to 10 in an engine mount for an engine of a vehicle.

## Revendications

1. Actionneur linéaire (10) comprenant un stator (2) dotée d'une bobine (3) électrique pouvant être alimentée en courant pour la génération d'un champ électromagnétique, ainsi qu'une armature d'aimant (1) qui est montée en mobilité axiale par rapport à un axe longitudinal (A) de la bobine (3) et à laquelle est agencé au moins un anneau magnétique permanent (4) opposé au stator (2) et ayant plusieurs segments d'anneau magnétique permanent (4a), cependant que, entre une surface des segments d'anneau magnétique permanent (4a) tournée vers le stator (2) et une surface du stator (2) tournée vers les segments d'anneau magnétique permanent (4a), il y a une fente angulaire (5) qui est telle qu'une distance radiale entre la surface des segments d'anneau magnétique permanent (4a) tournée vers le stator (2) et la surface du stator (2) tournée vers les segments d'anneau magnétique permanent s'accroît en direction axiale, cependant que
les segments d'anneau magnétique permanent (4a) de l'anneau magnétique permanent (4) sont agencés à l'armature d'aimant (1) à une distance tangentielle (8) entre eux,
**caractérisé en ce que**
il y a une distance angulaire de 2° à 5° ou de 3,5° entre les segments d'anneau magnétique permanent (4a), de telle sorte que les forces de levage qui résultent des forces répulsives agissant tangentiellement entre les segments d'anneau magnétique permanent (4a) et qui agissent radialement sur les segments d'anneau magnétique permanent (4a) sont plus faibles que les forces magnétiques d'attraction agissant radialement entre les segments d'anneau magnétique permanent (4a) et l'armature d'aimant (1).

2. Actionneur linéaire (10) selon la revendication 1, cependant que la fente angulaire (5) a un angle de fente (α) compris entre 2° et 10° ou entre 2° et 6°, ou de 4°.

3. Actionneur linéaire (10) selon la revendication 1 ou 2, cependant que la surface des segments d'anneau magnétique permanent (4a) tournée vers le stator (2) a, par rapport à l'axe longitudinal (A) de la bobine (3), une inclinaison comprise entre 2° et 10° ou entre 2° et 6°, ou de 4°.

4. Actionneur linéaire (10) selon la revendication 1 ou 2, cependant que la surface du stator (2) tournée vers les segments d'anneau magnétique permanent (4a) a, par rapport à l'axe longitudinal (A) de la bobine (3), une inclinaison comprise entre 2° et 10° ou entre 2° et 6°, ou de 4°.

5. Actionneur linéaire (10) selon une des revendications de 1 à 4, cependant que l'armature d'aimant (1) s'effile de façon axialement conique dans la zone des segments d'anneau magnétique permanent (4a).

6. Actionneur linéaire (10) selon une des revendications de 1 à 5, cependant que, en plus du au moins un anneau magnétique permanent (4), au moins un autre anneau magnétique permanent (4) est placé à l'armature d'aimant (1) en symétrie inversée par rapport à un plan perpendiculaire à l'axe longitudinal (A) de la bobine (3).

7. Actionneur linéaire (10) selon une des revendications de 1 à 6, cependant que les segments d'anneau magnétique permanent (4a) sont maintenus à l'armature d'aimant (1) uniquement par leurs forces magnétiques.

8. Actionneur linéaire (10) selon une des revendications de 1 à 7, cependant que l'armature d'aimant (1) consiste, en comparaison avec le stator (3), en un matériau à perméabilité plus élevée.

9. Actionneur linéaire (10) selon une des revendications de 1 à 8, cependant que la direction de magnétisation des segments d'anneau magnétique permanent (4a) est perpendiculaire à une surface d'appui de l'armature d'aimant (1) sur laquelle les segments d'anneau magnétique permanent (4a) sont en appui.

10. Actionneur linéaire (10) selon une des revendications de 1 à 9, cependant que les segments d'anneau magnétique permanent (4a) présentent un rapport entre longueur axiale et épaisseur radiale qui va de 2,5:1 à 3,0:1.

11. Utilisation de l'actionneur linéaire (10) selon une des revendications de 1 à 10 dans un palier de moteur pour un moteur d'un véhicule.
